# EUROPEAN PATENT APPLICATION

(11) **EP 4 530 091 A1**
(43) Date of publication of application: **02.04.2025**
(21) Application number: 23768677.9
(22) Date of filing: 08.08.2023
(51) Int. Cl.: B43L 1/00, B43L 1/08, G09B 11/00

(54) **BOARD SYSTEM HAVING A FACE CONFIGURED FOR WRITING OR FIXING OF PRINTED TEXTS OR IMAGES ON PHYSICAL MEDIUM AND RELATED METHOD OF PREPARATION**

(30) Priority: 29.08.2022 PT 2022118175
(71) Applicant: Bi-Silque, S.A., 3885-528 Esmoriz (PT)
(72) Inventor: VASCONCELOS, André, 3880-223 OVAR (PT)
(74) Representative: Monteiro Alves, Inês
(86) International application number: PCT/PT2023/050024
(87) International publication number: WO 2024/049313

(57) **Abstract**

The system of the invention comprises a first flexible sheet (1) which is made of at least one of the group consisting of an electromagnetic metal, a ferromagnetic metal alloy, or a first permanent magnetic component and a front face configured for writing or for the fixing of printed texts or images on physical medium and coated with a layer of coating composition. The first flexible sheet (1) is connected to a second flexible sheet (2), which is made of a material selected from at least one of the group consisting of a cork, an elastomer, a plastic and composites thereof.

The system can be rolled and unrolled without ruptures or loss of contact quality between the first flexible sheet (1) and the second flexible sheet (2) and provides comfortable writing for the user due to the buffering of the second flexible sheet (2).

## Description

### TECHNICAL DOMAIN

The present invention is related to a board system with a face configured for writing or for the fixing of printed texts or images on physical medium and optionally configured to be supported on a surface and to the respective method of preparation thereof. The board with a surface configured for writing can be, for example, a whiteboard of the type used in offices or classrooms.

### PRIOR ART

Several models of boards configured for writing are known to the state of the art, for example white boards, wherein the written content can be erased, and the surface can be normally reused for writing. These boards are usually made from rigid supports, such as chipboards and wood and polymer material sheets and have the disadvantage of being unpractical to transport.

There are also known from the state of the art boards configured for writing which are made of flexible plastic films over which there is applied a layer of magnetic paint. These boards in the form of films can be wound around an axis and transported and stored with ease. On the other hand, these films require that a ferromagnetic material sheet be installed on the wall or that the wall is painted with a magnetic paint, which naturally increases the installation costs. These boards have an additional disadvantage related to the discomfort for the user when writing, since the thickness of the film is reduced, there is the feeling of writing practically over a brick wall.

### SOLUTION OF THE PROBLEM AND ADVANTAGEOUS EFFECTS OF THE INVENTION

The present invention refers to a board system with a face configured for writing or for the fixing of printed texts or images on physical medium and optionally configured to be supported on a surface, which solves the problems of the state of the art by means of the use of a first flexible board made from at least one of the group consisting of a ferromagnetic metal, a ferromagnetic metal alloy or a first permanent magnetic component and a front face configured for writing or for the fixing of printed texts or images on physical medium, wherein the first flexible sheet is connected with a second flexible sheet.

In the preferred embodiments, the second flexible sheet includes a plurality of first orifices. The system further comprises a plurality of connection elements with a surface, which include a second permanent magnetic component connected to a male connector. The second permanent magnetic component connects to a wall by means of the male connector and to the first flexible sheet due to magnetic attraction forces.

The building materials of the first flexible sheet and the second flexible sheet are selected according to the adequate mechanical elasticity and memory properties thereof, so that the system of the invention can be rolled and unrolled without there occurring ruptures or quality losses between the first flexible sheet and the second flexible sheet or the front face of the first flexible sheet. The practical rolling and unrolling of the system according to the invention provides practical and economical transport and storage of the system according to the invention.

Once unrolled, the system according to the invention fully acquires its substantially planar surface, which is suitable for fixing to a wall.

In certain preferred embodiments according to the invention, the first flexible sheet includes in the front face thereof at least one layer of coating composition comprising permanent magnetic particles, whereby, considering the flexible mechanical properties of the first flexible sheet and the second flexible sheet, the acts of rolling and unrolling are performed without creases, cracks, or detachment of the coating composition of the first flexible sheet.

Another technical advantage associated to the invention resides in the fact that the second flexible sheet allows the writing over the front face of the first flexible sheet to be smooth and steady, considering the elastical and buffering properties of the cork, the elastomer and the composites thereof, which are materials preferably used for the preparation of the second flexible sheet.

### BRIEF DESCRIPTION OF THE FIGURES

With the purpose of providing an understanding of the principles according to the embodiments of the present invention, reference will be made to the embodiments illustrated in the figures and to the terminology used to describe them. In any case, it must be understood that there is no intention of limiting the scope of the present invention to the contents of the figures. Any subsequent alterations or modifications of the inventive characteristics herein illustrated, as well as any additional applications of the principles and embodiments of the invention illustrated, which would normally occur to a person skilled in the art having the knowledge of this description, are considered as being within the scope of the claimed invention.
Figure 1 - illustrates a schematic representation of a board system with a face configured for writing and for support on a vertical surface;
Figure 2 - illustrates a first view of a second flexible sheet connected to a first flexible sheet, wherein the set of the two connected sheets provides winding around an axis;
Figure 3 - illustrates a front face configured for writing of a first flexible sheet;
Figure 4 - illustrates a back view of a second flexible sheet including a plurality of first orifices;
Figure 5 - illustrates a back view of a second flexible sheet including a plurality of first orifices wherein a second permanent flexible component is fitted in each orifice;
Figure 6 - illustrates a connection element with a surface, which includes a second permanent magnetic component connected to a male connector;
Figure 7 - illustrates a lower view of a second permanent magnetic component;
Figure 8 - illustrates an upper view of a second permanent magnetic component;
Figure 9 - illustrates a second view of a second flexible sheet connected to a first flexible sheet, wherein the set of the two connected sheets provides winding around an axis;
Figure 10 - illustrates a detailed view of a board system with a face configured for writing and for support on a vertical surface.

### DESCRIPTION OF THE EMBODIMENTS

The present invention refers, in a first aspect, to a board system with a face configured for writing or for fixing printed texts or images on physical medium comprising:
a first flexible sheet (1), which is made of at least one of the group consisting of a ferromagnetic metal, a ferromagnetic metal alloy, or a first permanent magnetic component, and has a front face configured for writing or for fixing printed texts or images on a physical medium; and
a second flexible sheet (2), which has a front face connected to the rear face of said first flexible sheet (1);
wherein:
the first flexible sheet (1) has a thickness in the range of 0,20 mm to 0,30 mm and is coated with at least one coating composition, and wherein
the second flexible sheet (2) has a thickness in the range of 2 mm to 8 mm and is made of a material selected from at least one of the group consisting of a cork, an elastomer, a plastic and the composites thereof.

In the preferred embodiments of the present invention, the first flexible sheet (1) is made of ferromagnetic metals or metal alloys. In the preferred embodiments of the present invention, the first flexible sheet (1) is made of iron, galvanized iron or metal alloys comprising at least one of elements selected from iron, cobalt, and nickel.

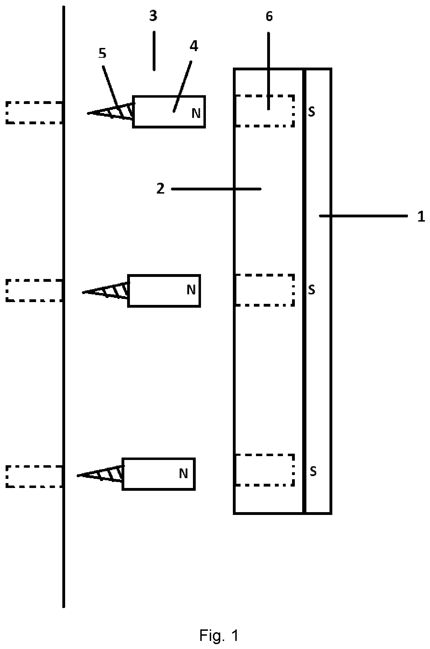

In the particularly preferred embodiments of the present invention, as illustrated in figure 1, the system, according to a first aspect of the invention, is configured to be supported on a surface and additionally comprises:
a plurality of connection elements with a surface (3), wherein each of said connection elements with a surface (3) includes a second permanent magnetic component (4) connected to a male connector (5); and wherein
said male connector (5) is configured to connect with a female connector arranged on a surface; and wherein
a rear face of said second flexible metal sheet (2) includes a plurality of first orifices (6); and wherein
said second permanent magnetic component (4) is configured to fit into the first orifice (6) and to connect to the rear surface of said first flexible sheet (1) by magnetic attraction forces between at least one of the group consisting of a ferromagnetic metal, a ferromagnetic metal alloy or a first permanent magnetic component and said second permanent magnetic component (4).

As illustrated in Figure 1, the first flexible sheet (1) is connected to the second flexible sheet (2), whereby the rear face of the second flexible sheet (2) has a plurality of first orifices (6), wherein each first orifice (6) is configured for fitting a connecting element to a surface (3), which includes a second permanent magnetic component (4) connected to a male connector (5). The male connector (5) is configured to connect to a female connector arranged on a support surface, for example, a wall. The second permanent magnetic component (4) connects to the rear surface of said first flexible sheet (1) by magnetic attraction forces between at least one of the group consisting of a ferromagnetic metal, a ferromagnetic metal alloy or a first magnetic component and the second permanent magnetic component (4). In the embodiments wherein the first flexible sheet (1) includes a first magnetic component, the magnetic attraction forces occur between a first magnetic pole in the first permanent magnetic component, for example a south pole (S) and a second opposite magnetic pole in said second permanent magnetic component (4), for example a north pole (N).

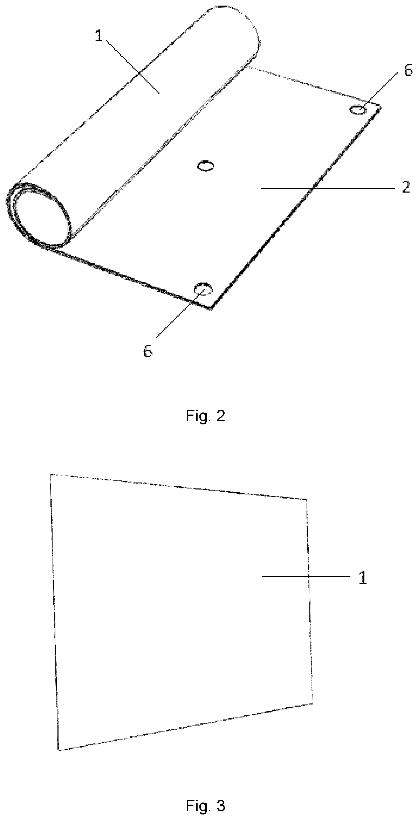

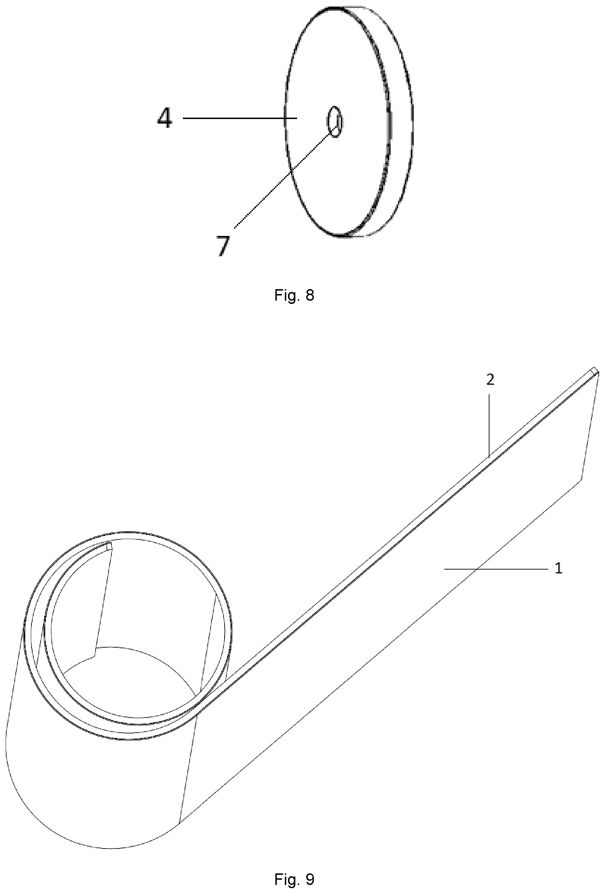

As illustrated in Figures 2 and 9, the connection between the first flexible sheet (1) and the second flexible sheet (2), which can have substantially equal areas, in conjunction with their flexible mechanical properties, allows said joined sheets to wind both around a longitudinal axis, as around a transverse axis. For said winding to be performed according to the purposes of the invention, the first flexible sheet (1) has a thickness in the range of 0,20 mm to 0,30 mm. Even more preferably, the second flexible sheet (2) has a thickness in the range of 4 mm to 6 mm. Preferably, the rear face of said first flexible sheet (1) and the front face of the second flexible sheet (2) are connected by pasting, by means of adhesives known to the state of the art, including aqueous medium adhesives, with a subsequent pressing step. The second flexible sheet (2) preferably has the front face thereof with roughness or has a porous structure so as to provide an adequate fixing of the adhesive and the subsequent connection between the first flexible sheet (1) and the second flexible sheet (2).

The winding of the joined sheets around a longitudinal axis or around a transverse axis refers to the wrapping of the joined sheets in cylindrical or roll form.

The first flexible sheet (1) and the second flexible sheet (2) with substantially equal areas can be produced in different dimensions, including relatively elevated dimensions, such as boards larger than 120cm x 120cm, 240cm x 120cm or even 300cm x 120cm, maintaining the mechanical properties of the system.

Alternatively, as illustrated in Figure 3, the first flexible metal sheet (1) is made of a ferromagnetic metal or a ferromagnetic metal alloy wherein the front face of said first flexible sheet (1) is coated with at least one layer of the coating composition comprising permanent magnetic particles. In this embodiment, the layers of coating composition, for example, paints or lacquers with magnetic particles, provide the opposite magnetic pole relative to said second permanent magnetic component (4), which allows the connection by means of stronger magnetic forces between the first flexible sheet (1) and the second permanent magnetic component (4). The number of layers of coating composition or the concentration of magnetic particles in said composition contributes to the elevation of the magnetic attraction forces which maintain the system according to the present invention connected to a surface.

In the preferred embodiments of the present invention, the first permanent magnetic component is selected from at least one of the group consisting of a neodymium-iron-boron magnet, of alnico, ferrite, of samarium cobalt, of injection molded magnets and materials that are magnetically attracted by permanent magnets.

In other particularly preferred embodiments of the present invention, the second permanent magnetic component (4) is selected from at least one of the group consisting of a neodymium-iron-boron magnet, alnico, ferrite, samarium-cobalt, of injection molded magnets and the materials that are magnetically attracted by permanent magnets.

In the preferred embodiments of the present invention, the second flexible sheet (2) is made of a material selected from at least one of the group consisting of a cork, an elastomer, a plastic, and the composites thereof. These materials allow a suitable flexibility similar to the flexibility of the first flexible sheet (1), so that the board of the present invention winds around the longitudinal or transverse axis thereof, without compromising the adherence of the connection adhesives. Additionally, the winding occurs without detachment or cracks of the eventual coating composition layers relative to the first flexible sheet (1).

The second flexible sheet (2) also allows the writing over the front face of the first flexible sheet (1) to be smooth and steady, considering the elastic and buffering properties of the cork, the elastomer, the plastic, and the composites thereof.

As examples of elastomeric materials there can be cited the acrylic rubber, the ethylene acrylic rubber, the butadiene acrylonitrile rubber, the butyl rubber, the chloropolyethylene, the polychloroprene rubber, the chlorosulphonated polyethylene, the epichlorohydrin rubber, the epoxyprene, the ethylene-propylene diene rubber, the ethylene vinyl acetate, the propylene fluoroethylene copolymer, fluorocarbons, Hypalon rubber, the hydrogenated nitrile rubber, the polyisoprene rubber, the natural rubber, the nitrile rubber, the neoprene, the polynorbornene, the perfluorocarbons, the silicone rubber, the polybutadiene styrene, styrene copolymers, the tetrafluoroethylene propylene copolymers, the polyurethanes, the methyl vinyl silicone rubber, the viton, polyester copolymers, the polyether and polyamide copolymers, the polyolefins, the polybutadiene rubber, and the butadiene-styrene rubber.

In the particularly preferred embodiments, the second flexible sheet (2) comprises cork or chipboards comprising cork. As an example of chipboards comprising cork, there can be cited a composition produced from cork grains with longitudinal dimensions in the range of 2 to 8 mm joined by a binder. The binder can be a polyurethane. Preferably, the cork or chipboards comprising cork have a specific weight in the range of 240 to 290 kg/m³, a breaking stress equal to or greater than 200 kPa, a compression from 15 to 25%, a recovery equal to or greater than 60% and the material must not disintegrate in boiling water, whereby these physical characteristics are measured and evaluated in accordance with the ISO 7322 norm.

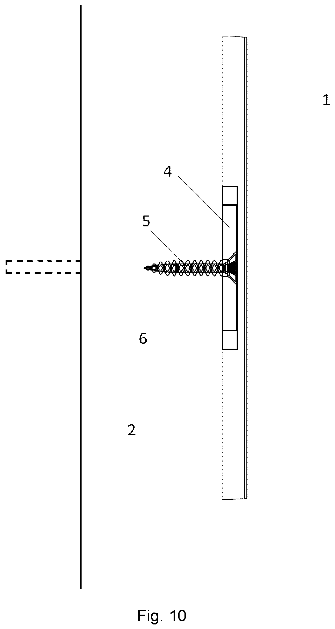

In the particularly preferred embodiments, the first orifice (6) has a depth less than the thickness of the second flexible sheet (2), as illustrated in Figures 1 and 10. Preferably, the first orifice (6) has a depth in the range of 1,5 mm to 8,0 mm. Even more preferably, the first orifice (6) has a depth in the range of 3 mm to 5 mm. In this particularly preferred form, an intermediary layer with reduced thickness of the material of the second flexible sheet (2) is placed between the front face of the second permanent magnetic component (4) and the rear face of the first flexible sheet (1), whereby said intermediary layer does not compromise the magnetic attraction forces between at least one of the group consisting of a ferromagnetic metal, a ferromagnetic metal alloy or a first permanent magnetic component and the plurality of second permanent magnetic components (4). Additionally, this embodiment has the advantage of facilitating the application of an adhesive layer between the integrity of the front face of the second flexible sheet (2) and the integrity of the first flexible face (1), so as to allow a more efficient pasting operation and subsequent pressing between said two components, without the adhesive portions penetrating in the first orifices (6).

Alternatively, a plurality of first orifices (6) can traverse the entire cross section of the second flexible sheet (2), so as to elevate the magnetic attraction forces between at least one of the group consisting of a ferromagnetic metal, a ferromagnetic metal alloy or a first permanent magnetic component, and the plurality of second permanent magnetic components (4) by reduction of the proximity thereto or by the direct contact between said components.

Preferably, the second permanent magnetic component (4) has a length substantially equal to the depth of the first orifice (6), wherein said length is referenced relative to the longitudinal axis of the male connector (5), as illustrated in Figure 1. This embodiment elevates the contact zone between the second permanent magnetic component (4) and the first orifice (6) and results in a firmer and more stable support of the board system with a face configured for writing or fixing of printed texts or images on physical medium and configured to be supported on a surface, for example a wall.

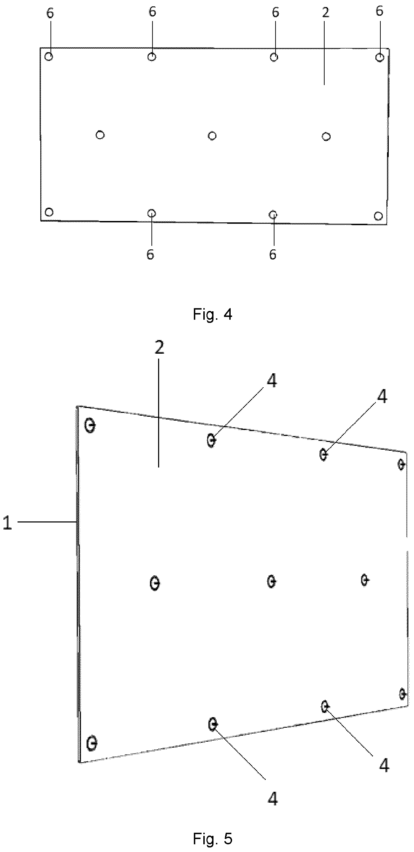

In other preferred embodiments according to the present invention, a plurality of first orifices (6) is arranged along the margins of the rear face of the second flexible sheet (2). Even more preferably, as illustrated in Figures 4 and 5, a plurality of first orifices (6) is arranged in lines and columns along the rear face of the second flexible sheet (2). These embodiments allow a wide and uniform distribution of the first orifices (6) along the rear face of the second flexible sheet (2), it being possible that a substantially larger number of permanent second magnetic components (4) are fitted in said first orifices (6), so as to elevate the stability of the board support on the support surface, wherein it is fixed by means of the male connectors (5) and the respective female connectors arranged on the support surface. Even more preferably, in order to increase the stability of the board support on the surface to which it is fixed, the ratio of the first orifices (6) by m² of the second flexible sheet (2) is in the range of 3 to 7.

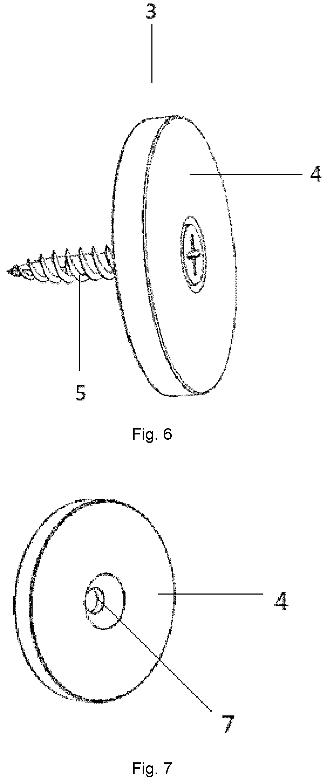

As illustrated in Figure 6, a connecting element with a surface (3) includes a second permanent magnetic component (4) connected to a male connector (5), whereby the connection is made by means of the insertion of the male connector (5) in a second orifice (7) vertically or transversely arranged along the second permanent magnetic component (4). The second orifice (7) is illustrated in Figures 7 and 8. Preferably, the second orifice (7) is substantially centrally positioned relative to a horizontal or longitudinal section of the second permanent magnetic component (4), as illustrated in Figures 7 and 8.

Alternatively, the second permanent magnetic component (4) and the male connector (5) can constitute a single piece, as will be appreciated by a person skilled in the art.

In the particularly preferred embodiments, as illustrated in Figures 6 to 8, the second permanent magnetic component (4) presents a cylinder shaped configuration.

In any case, it will be understood by a person skilled in the art that the second permanent magnetic component (4) can be constructed in several shapes, for example in the shape of a disc, toroidal, polyhedral, toroidal polyhedron, ellipsoid, hollow cylindrical, solid cylindrical, hollow elliptical cylindrical and solid elliptical cylindrical.

As will be appreciated by a person skilled in the art, the coating layer or composition coating layer comprising permanent magnetic particles is applied over the front face of the first flexible sheet (1) configured for writing or fixing of printed texts or images on physical medium and it is made from materials known to the state of the art. The coating of the first flexible sheet (1), namely a paint or lacquer, is configured for writing and allows manually written graphic representations to be erased, by means of eraser devices known to the state of the art, whereby it is possible to rewrite the information on the board. As regards the fixation of printed, written or drawn texts or images on physical medium, said fixation is performed by magnet parts, which are attracted by magnetic forces between at least one of the group consisting of a ferromagnetic metal, a ferromagnetic metal alloy or a first permanent magnetic component of the first flexible sheet (1) and said magnet parts, maintaining the physical medium fixed over said front face of the first flexible sheet (1) and the magnet part. Paper is an example of a physical medium typically used for this purpose.

The present invention refers, in a second aspect, to a method of preparation of the board system with a face configured for writing or fixing of printed texts or images on physical medium, in accordance with the first aspect of the invention, comprising the following steps:
a) application of at least one layer of coating composition over the front face of the first flexible sheet (1);
b) Cutting of a first flexible sheet (1);
c) Cutting of a second flexible sheet (2);
d) Pasting and subsequent pressing of the first flexible sheet (1) over the second flexible sheet (2); wherein
steps b) and c) can be performed in any order.

In the particularly preferred embodiments, the method according to the second aspect of the invention comprises the following additional step:
preparation of a plurality of connection elements with a surface (3), wherein each of said connection elements with a surface (3) includes the connection of a second permanent magnetic component (4) to a male connector (5).

In the preferred embodiments, the first flexible sheet (1) and the second flexible sheet (2) are prepared by calendering technique, prior to cutting same.

In the preferred embodiments, the method of preparation of the system of the present invention comprises the application of at least one layer of coating composition comprising permanent magnetic particles over the front face of the first flexible sheet (1).

Optionally, there can further be performed the steps of rounding the edges of the first flexible sheet (1) and the second flexible sheet (2) to provide a more suitable aesthetic finishing to the product.

As will be appreciated by a person skilled in the art, the second permanent magnetic component (4) is prepared by methods known to the state of the art, such as compacting and subsequent sintering of permanent magnetic particles.

As used throughout this patent application, the expression "or" is used in the inclusive sense, unless the exclusive sense is clearly defined in a specific situation. In this context, a sentence of the type "X uses A or B" must be interpreted as including all the pertinent inclusive combinations, for example "X uses A", "X uses B" and "X uses A and B".

As used throughout this patent application, the indefinite article "one" must be interpreted generally as "one or more", unless the sense of a singular embodiment is clearly defined in a specific situation.

As presented in this specification, the expressions listed with examples must be interpreted with the purpose of illustrating an example and not indicating a preference.

The subject matter described above is provided as an illustration of the present invention and must not be interpreted so as to limit it. The terminology used with the purpose of describing specific embodiments, according to the present invention, must not be interpreted to limit the invention. As used in the specification, the definite and indefinite articles, in their singular form, aim at the interpretation of also including the plural forms, unless the context of the description indicates, explicitly, the contrary. It will be understood that the expressions "comprise" and "include", when used in this description, specify the presence of the characteristics, the elements, the components, the steps, and the related operations, however, they do not exclude the possibility of other characteristics, elements, components, steps, and operations also being contemplated.

All the alterations, providing that they do not modify the essential characteristics of the claims that follow, must be considered as being within the scope of protection of the present invention.

### LIST OF REFERENCE INDICATIONS

- 1.: A first flexible sheet
- 2.: A second flexible sheet
- 3.: A connecting element with a surface
- 4.: A second permanent magnetic component
- 5.: A male connector
- 6.: A first orifice
- 7.: A second orifice

## Claims

1. A board system with a face configured for writing or fixing of printed texts or images on physical medium comprising:
a first flexible sheet (1), which is made of at least one of the group consisting of a ferromagnetic metal, a ferromagnetic metal alloy, or a first permanent magnetic component, and has a front face configured for writing or for fixing printed texts or images on a physical medium; and
a second flexible sheet (2), which has a front face connected to the rear face of said first flexible sheet (1);
**characterized by**
the first flexible sheet (1) having a thickness in the range of 0,20 mm to 0,30 mm and
being covered by at least one layer of a coating composition; and by the second flexible plate (2) having a thickness in the range of 2 mm to 8 mm and being made of a material selected from at least one of the group consisting of a cork, an elastomer, a plastic and the composites thereof.

2. The system, according to claim 1, **characterized by** being configured to be supported on a surface and additionally comprising:
a plurality of connection elements with a surface (3), wherein each of said connection elements with a surface (3) includes a second permanent magnetic component (4) connected to a male connector (5); and wherein
said male connector (5) is configured to connect with a female connector arranged on the surface; and wherein
a rear face of said second flexible metal sheet (2) includes a plurality of first orifices (6); and wherein
said second permanent magnetic component (4) is configured to fit into the first orifice (6) and to connect to the rear surface of said first flexible sheet (1) by magnetic attraction forces between at least one of the group consisting of a ferromagnetic metal, a ferromagnetic metal alloy or a first permanent magnetic component and said second permanent magnetic component (4).

3. The system, according to any of the preceding claims, **characterized by** the first flexible sheet (1) being made from iron, galvanized iron, or metal alloys, comprising at least one of the elements selected of iron, cobalt and nickel.

4. The system, according to any of the preceding claims, **characterized by** the first flexible sheet (1) including at least one first permanent magnetic component selected from the group consisting of a neodymium-iron-boron magnet, of alnico, ferrite, of samarium cobalt, of injection molded magnets and materials that are magnetically attracted by permanent magnets.

5. The system, according to any of claims 2 to 4, **characterized by** the second permanent magnetic component (4) being selected from at least one of the group consisting of a neodymium-iron-boron magnet, of alnico, ferrite, of samarium cobalt, of injection molded magnets and the materials that are magnetically attracted by permanent magnets.

6. The system, according to any of the preceding claims, **characterized by** the composition coating layer comprising permanent magnetic particles.

7. The system, according to any of the preceding claims, **characterized by** the rear face of the first flexible sheet (1) and the front face of the second flexible sheet (2) being connected by pasting and subsequent pressing.

8. The system, according to any of claims 2 to 7, **characterized by** the first orifice (6) having a depth less than the thickness of the second flexible sheet (2).

9. The system, according to any of claims 2 to 8, **characterized by** the first orifice (6) having a depth in the range of 1,5 mm to 8 mm.

10. The system, according to any of claims 2 to 9, **characterized by** the second permanent magnetic component (4) having a length substantially equal to the depth of the first orifice (6), wherein said length is referenced relative to the longitudinal axis of the male connector (5).

11. The system, according to any of claims 2 to 10, **characterized by** a plurality of first orifices (6) being arranged along the margins of the rear face of the second flexible sheet (2).

12. The system, according to any of claims 2 to 11, **characterized by** a plurality of first orifices (6) being arranged in lines and columns along the rear face of the second flexible sheet (2).

13. The system, according to any of claims 2 to 12, **characterized by** the ratio of first orifices (6) by m² of the second flexible sheet (2) being in the range of 3 to 7.

14. A method for preparation of the board system with a face configured for writing or fixing of printed texts or images on a physical medium, as defined in any of the preceding claims, **characterized by** comprising the following steps:
a) application of at least one layer of coating composition over the front face of the first flexible sheet (1);
b) Cutting of a first flexible sheet (1);
c) Cutting of a second flexible sheet (2);
d) Pasting and subsequent pressing of the first flexible sheet (1) over the second flexible sheet (2); wherein
steps b) and c) can be performed in any order.

15. The method of preparation of the system, according to the preceding claim, **characterized by** comprising the following additional step:
preparation of a plurality of connection elements with a surface (3), wherein each of said connection elements with a surface (3) includes the connection of a second permanent magnetic component (4) to a male connector (5).

16. The method of preparation of the system, according to any of claims 14 or 15, **characterized by** comprising the application of at least one layer of coating composition comprising permanent magnetic particles over the front face of the first flexible sheet (1).
